# EUROPEAN PATENT SPECIFICATION

(11) **EP 0 938 990 B1**
(45) Date of publication and mention of the grant of the patent: **18.10.2000**
(21) Application number: 98830706.2
(22) Date of filing: 25.11.1998
(51) Int. Cl.: B60H 1/00, B60K 11/04

(54) **A heat exchanger for vehicles, comprising a positioning and fixing element projecting from the heat-exchanger core**
Wärmetauscher für Fahrzeuge, mit einem Fixier- und Positionierelement das aus dem Wärmetauscherkern vorspringt
Echangeur de chaleur pour véhicules, comprenant un élément pour le positionnement et la fixation saillant par rapport au corps d'échangeur de chaleur

(30) Priority: 26.02.1998 IT TO980155
(43) Date of publication of application: 01.09.1999
(73) Proprietor: MAGNETI MARELLI CLIMATIZZAZIONE S.p.A., 10046 Poirino (Torino) (IT)
(72) Inventor: Tiziano, Guiseppe, 10155 Torino (IT)
(74) Representative: Marchitelli, Mauro

(56) References cited:
- EP-A- 0 211 253
- DE-A- 19 602 915
- DE-C- 3 926 569
- US-A- 5 476 138

## Description

The present invention relates to a heat exchanger for vehicles provided with at least one positioning and fixing element which projects from a lateral wall of the heat exchange core.

Solutions are already known wherein a pin-shaped fixing element is fixed to a terminal element generally used for protecting the ends of the heat exchange core and for stiffening from the structural point of view the heat exchanger. This fixing is normally carried out by means of screws, rivets or by welding.

EP-A-211253 according to the preamble of claim 1 discloses a resilient retaining system for radiators of internal combustion engines, comprising bottom spaced-apart resilient bearings in which the radiator is vertically supported and positively located horizontally, and a top one-piece retaining clip constituting a top bearing and vertically supported via resilient pads.

The object of the present invention is to provide an improved heat exchanger which permits to simplify the assembling operations and to reduce the number of components necessary for carrying out the fixing of the heat exchanger in a complete heat exchange module.

According to the present invention, this object is achieved by a heat exchanger having the features forming the subject of the main claim.

Characteristics and advantages of the present invention will become evident from the description which follows, with reference to the annexed drawings, given purely by way of non-limiting example, in which:
- figure **1** is a schematic perspective view of a heat exchanger according to the present invention,
- figure **2** is a perspective view in a greater scale of the part indicated by arrow II in figure 1,
- figure **3** is a partially sectioned lateral view of the element indicated by arrow III in figure 2, and
- figures **4, 5** and **6** are perspective views which show three variants of the fixing system according to the invention.

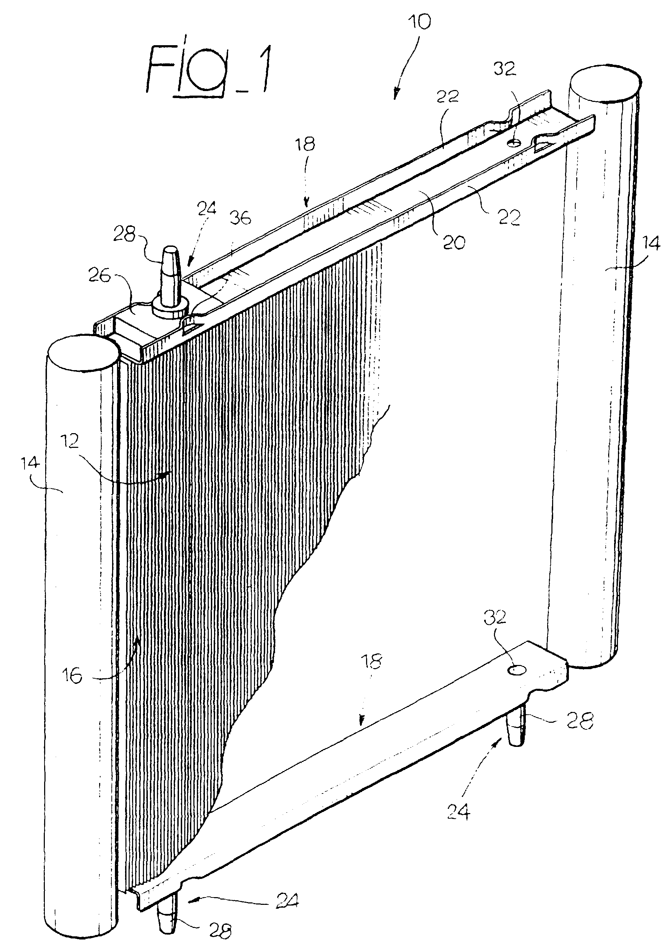

With reference to the drawings, at 10 is indicated a heat exchanger for vehicles, comprising a heat exchange core 12 and a pair of manifolds or distributors 14. The shape of the heat exchange core 12 and the number and the shape of the manifolds 14 may vary depending on whether the heat exchanger is a radiator for engine cooling, a condenser of an air-conditioning system or the radiator core for heating the air flow directed in the passenger compartment of the vehicle. The structure shown in figure 1 is typical of a condenser but the invention can be applied also to other types of heat exchangers.

The heat exchange core 14 has a parallelepipedal shape with two main faces 16 (only one of which is visible in figure 1) and four lateral walls parallel in pairs. The heat exchange core 12 is manufactured in a way per se known and comprises a pack of fins which are traversed by a plurality of tubes in which circulates the heat exchange fluid.

A pair of terminal elements 18 are arranged along two lateral walls of the heat exchange block 14 and are fixed to the latter in a way per se known. The terminal elements 18 have the purpose to protects the ends of the heat exchange core and also serve for stiffening the heat exchanger from the structural point of view. Each terminal element 18 is formed by a metallic profiled element with a U-shaped section and has a bottom wall 20 adjacent to the heat exchange core 12 and two lateral walls 22 which project outwardly.

The heat exchanger 10 comprises one or more positioning and fixing elements 14 which serve for correctly positioning and for fixing the heat exchanger to a complete heat exchanger module or to the body of a vehicle (both not shown). In the example shown in figure 1 are provided two positioning and fixing elements 24 for each terminal element 18, but the number of such fixing elements may vary depending on the requirements.

Each positioning and fixing element 24 has a base 26 from which projects a pin 28 which is intended to be inserted in a hole provided in the structure (not shown) to which the heat exchanger is fixed.

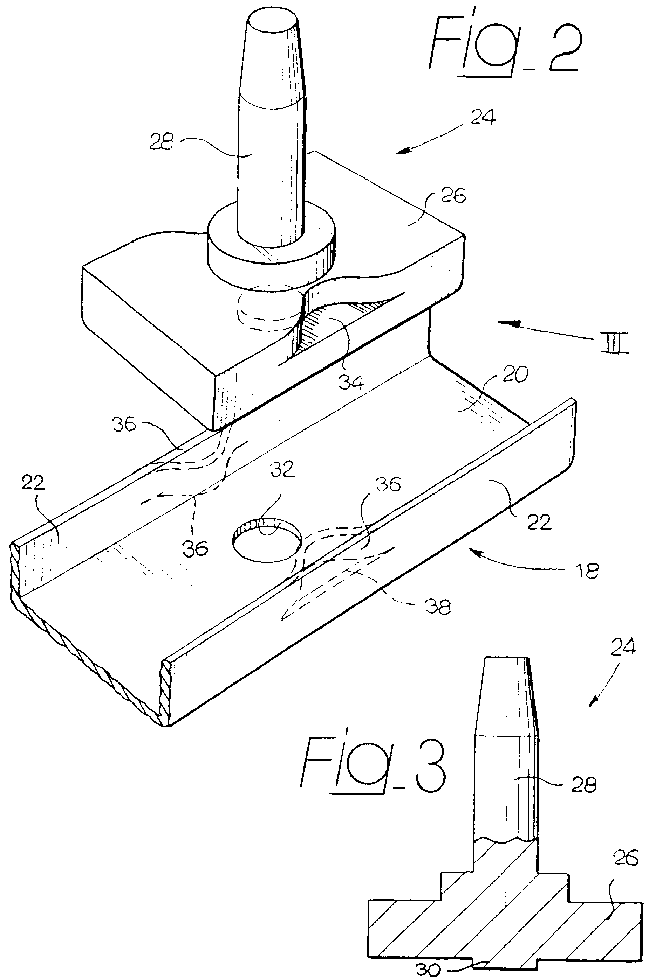

On the opposite part of the pin 28, the base 26 has a shallow projection 30 which engages a reference hole 32 formed in the bottom wall 20 of the terminal element 18. The base 24 has a thickness substantially equal to the height of the lateral walls 22 and has two recessed portions 34 (only one of which is visible in figure 2) extending inwardly.

Each positioning and fixing element 24 is fixed to the terminal element 18 by a permanent deformation of portions 36 of the lateral walls 22. The deformed portions 36 form a clamping system which holds the positioning element 24 both along the longitudinal axis of the terminal element 18 and in a direction orthogonal to the bottom wall 20.

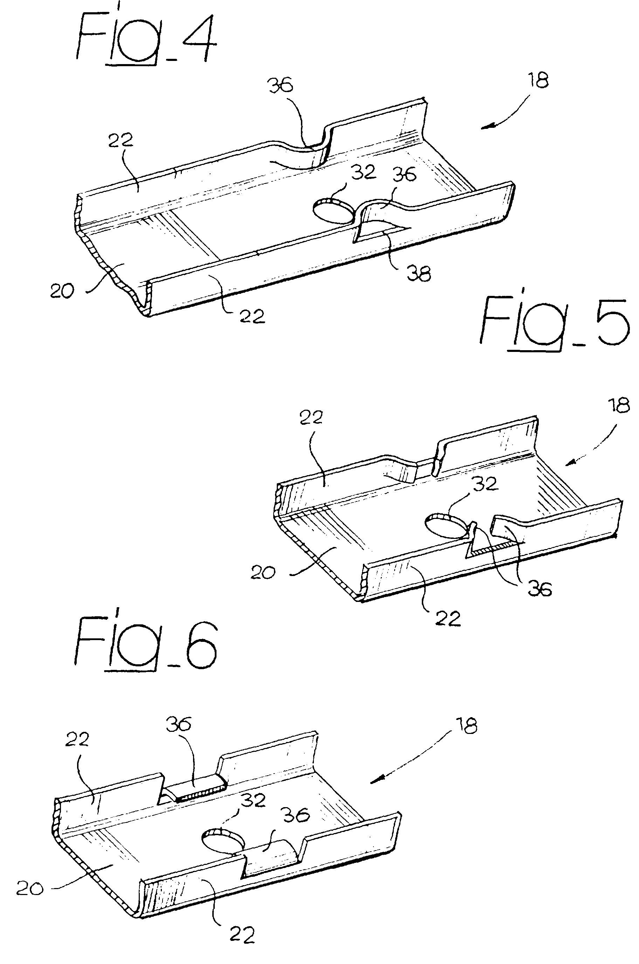

As shown in figures 4, 5 and 6, the deformed portions 36 can be formed in different ways. In the embodiment shown in figures 1, 2 and 4 on the lateral walls 22 are formed through cuts 38 in correspondence with the portions to be deformed 36. The deformation is carried out in a direction orthogonal to the lateral walls 22, so as to form on each wall a loop projecting inwardly which is positioned on the corresponding recess 34 of the base 26.

In the variant shown in figure 5 on each lateral wall 22 in correspondence with the portion to be deformed are formed a longitudinal cut and a transversal cut, so that by means of an inward deformation are formed two tabs which are positioned on the recessed portion 34.

In the variant of figure 6 on each lateral wall are formed two parallel transversal cuts and the portion 36 comprised between these cuts is deformed so as to form a tab bent inwardly substantially of 90° against the recessed portion 34.

The positioning and fixing elements 24 have a standardized shape and can be placed in any point of the terminal element without need to use auxiliary fixing element such as screws, rivets or the like. The solution according to the invention permits therefore to obtain a reduction of the costs as a consequence of the reduction of the number of components to be handled and of the simplification of the operation for their assembling. The accommodation of the same type of heat exchanger in different versions of vehicles is substantially simplified by virtue of the possibility to vary the position of the fixing element along the whole length of the heat exchanger.

## Claims

1. A heat exchanger for vehicles, comprising a heat exchange core (12) having a parallelepipedal shape with two main faces (16) and two lateral walls, the heat exchanger (10) including at least one terminal element (18) arranged along one of the lateral walls of the heat exchange core (12), the heat exchanger (10) having at least one positioning and fixing element (24) at least in part projecting from said terminal element (18), said terminal element (18) has a U-shaped profile with a bottom wall (20) in contact with the heat exchange core (12) and a pair of lateral walls (22) which project outwardly of the heat exchange core (12), characterized in that said positioning and fixing element (24) comprises a pin (28) projecting from a base (26) which is fixed to the terminal element (18) by a deformation of a portion (36) of its lateral walls (22).

2. A heat exchanger according to claim 1, characterized in that said positioning and fixing element (24) has a projection (30), placed on the opposite side of said pin (28), which engages a reference hole (32) provided in the bottom wall (20) of the terminal element (18).

3. A heat exchanger according to claim 1, characterized in that said positioning and fixing element (24) has a recessed and inwardly extending portion (34) on which acts said deformed portion (36).

4. A heat exchanger according to claim 1, characterized in that each deformed portion (36) forms a inwardly extending loop orthogonal to the lateral wall (20).

5. A heat exchanger according to claim 1, characterized in that each deformed portion (36) forms a pair of tabs projecting inwardly of the terminal element (18).

6. A heat exchanger according to claim 1, characterized in that each deformed portion (36) forms a tab bent substantially of 90° toward the inner part of the terminal element (18).

## Patentansprüche

1. Wärmetauscher für Fahrzeuge, umfassend einen Wärmetauschkern (12) in Parallelepipedform, mit zwei Hauptseiten (16) und zwei Seitenwänden, wobei der Wärmetauscher (10) zumindest ein Verbindungselement (18) einschließt, das längs einer der Seitenwände des Wärmetauschkerns (12) angeordnet ist und der Wärmetauscher (10) zumindest ein Fixier- und Positionierelement (24) aufweist, das zumindest teilweise aus dem Verbindungselement (18) vorspringt, wobei das Verbindungselement (18) ein U-förmiges Profil mit einer Bodenwand (20) aufweist, die mit dem Wärmetauschkern (12) in Kontakt ist, sowie ein Paar Seitenwände (22), die von dem Wärmetauschkern (12) nach außen vorstehen,
dadurch gekennzeichnet, daß
das Fixier- und Positionierelement (24) einen Tragzapfen (28) umfaßt, der von einer Basis (26) absteht, die durch Verformung eines Abschnitts (36) ihrer Seitenwände (22) an dem Verbindungselement (18) befestigt ist.

2. Wärmetauscher nach Anspruch 1, dadurch gekennzeichnet, daß das Fixier- und Positionierelement (24) einen Vorsprung (30) aufweist, der auf der entgegengesetzten Seite des Tragzapfens (28) plaziert ist und in ein Bezugsloch (32) eingreift, das in der Bodenwand (20) des Verbindungselementes (18) vorgesehen ist.

3. Wärmetauscher nach Anspruch 1, dadurch gekennzeichnet, daß das Fixier- und Positionierelement (24) eine Einbuchtung (34) aufweist, auf die der verformte Abschnitt (36) wirkt.

4. Wärmetauscher nach Anspruch 1, dadurch gekennzeichnet, daß jeder verformte Abschnitt (36) einen rechtwinklig zu der Seitenwand (20) nach innen verlaufenden Bügel bildet.

5. Wärmetauscher nach Anspruch 1, dadurch gekennzeichnet, daß jeder verformte Abschnitt (36) ein Paar Nasen bildet, die von dem Verbindungselement (18) nach innen vorstehen.

6. Wärmetauscher nach Anspruch 1, dadurch gekennzeichnet, daß jeder verformte Abschnitt (36) eine Nase bildet, die im wesentlichen 90° zum Innenteil des Verbindungselementes (18) hin gebogen ist.

## Revendications

1. Echangeur de chaleur pour véhicule, comprenant un faisceau (12) d'échange de chaleur de forme parallélépipédique ayant deux faces principales (16) et deux parois latérales, l'échangeur de chaleur (10) comprenant au moins un élément terminal (18) placé le long de l'une des parois latérales du faisceau (12) d'échange de chaleur, l'échangeur de chaleur (10) ayant au moins un élément (24) de positionnement et de fixation dépassant au moins en partie de l'élément terminal (18), ledit élément terminal (18) ayant un profil en U avec une paroi inférieure (20) au contact du faisceau (12) d'échange de chaleur et deux parois latérales (22) qui dépassent vers l'extérieur du faisceau (12) d'échange de chaleur, caractérisé en ce que l'élément (24) de positionnement et de fixation comporte une broche (28) qui dépasse d'une base (26) fixée à l'élément terminal (18) par déformation d'une partie (36) de ses parois latérales (22).

2. Echangeur de chaleur selon la revendication 1, caractérisé en ce que l'élément (24) de positionnement et de fixation possède une saillie (30) placée du côté opposé à la broche (28) et qui coopère avec un trou (32) de référence placé dans la paroi inférieure (20) de l'élément terminal (18).

3. Echangeur de chaleur selon la revendication 1, caractérisé en ce que l'élément (24) de positionnement et de fixation a une partie évidée (34) s'étendant vers l'intérieur et sur laquelle agit la partie déformée (36).

4. Echangeur de chaleur selon la revendication 1, caractérisé en ce que chaque partie déformée (36) forme une boucle s'étendant vers l'intérieur et orthogonale à la paroi latérale (20).

5. Echangeur de chaleur selon la revendication 1, caractérisé en ce que chaque partie déformée (36) forme une paire de pattes dépassant vers l'intérieur de l'élément terminal (18).

6. Echangeur de chaleur selon la revendication 1, caractérisé en ce que chaque partie déformée (36) forme une patte courbée pratiquement à 90° vers la partie interne de l'élément terminal (18).
